# EUROPÄISCHE PATENTSCHRIFT

(11) **EP 3 297 115 B1**
(45) Veröffentlichungstag und Bekanntmachung des Hinweises auf die Patenterteilung: **25.12.2019**
(21) Anmeldenummer: 16189632.9
(22) Anmeldetag: 20.09.2016
(51) Int. Cl.: H02J 3/32, H02J 3/24

(54) **ANORDNUNG MIT EINER ENERGIESPEICHEREINRICHTUNG UND ENERGIEWANDLEREINRICHTUNG ZUM AUFNEHMEN VON ELEKTRISCHER ENERGIE AUS EINEM STROMNETZ UND ABGEBEN VON ELEKTRISCHER ENERGIE AN DAS STROMNETZ**
ASSEMBLY WITH AN ENERGY STORAGE DEVICE AND ENERGY CONVERTER FOR ABSORBING ELECTRICAL ENERGY FROM A POWER NETWORK AND DISCHARGE OF ELECTRICAL ENERGY TO THE POWER NETWORK
SYSTÈME COMPRENANT UN DISPOSITIF D'ACCUMULATION D'ÉNERGIE ET UN CONVERTISSEUR D'ÉNERGIE DESTINÉ À RECEVOIR DE L'ÉNERGIE ÉLECTRIQUE PROVENANT D'UN RÉSEAU ÉLECTRIQUE ET FOURNIR L'ÉNERGIE ÉLECTRIQUE AU RÉSEAU ÉLECTRIQUE

(43) Veröffentlichungstag der Anmeldung: 21.03.2018
(73) Patentinhaber: AEG Power Solutions GmbH, 59581 Warstein-Belecke (DE)
(72) Erfinder: Kempen, Stefan, 59821 Arnsberg (DE); Becker, Andreas, 34497 Korbach (DE); Brandt, Dieter, 59581 Warstein (DE)
(74) Vertreter: Graefe, Jörg

(56) Entgegenhaltungen:
- WO-A1-2007/104167
- WO-A1-2014/177175
- WO-A1-2015/165517
- WO-A2-2014/177264
- DE-A1- 1 813 853

## Beschreibung

Die vorliegende Erfindung betrifft eine Anordnung zum Aufnehmen von elektrischer Energie aus einem Stromnetz und Abgeben von elektrischer Energie an das Stromnetz, mit
- einem Umrichter zum Wandeln von Wechselspannung in Gleichspannung und umgekehrt, wobei der Umrichter
   - einen Gleichspannungsein- und -ausgang,
   - einen Wechselspannungsein- und -ausgang und
   - ein Leistungsteil mit Leistungshalbleiterbauelementen aufweist, das einerseits mit dem Gleichspannungsein- und -ausgang und andererseits mit dem Wechselspannungsein- und -ausgang verbunden ist,
- einer Energiespeichereinrichtung, insbesondere einem Batteriespeicher aus Sekundärzellen, und
- einer Energiewandlereinrichtung, insbesondere einem Wärmeerzeuger,
- einer Umschalteinrichtung, mit welcher entweder die Energiespeichereinrichtung oder die Energiewandlereinrichtung mit dem Gleichspannungsein- und -ausgang verbindbar ist.

Die Erfindung ist in den anhängenden Ansprüchen angegeben.

Mit Batteriespeichern ist es möglich, elektrische Energie aus dem Netz zu entnehmen, wenn von den an das Netz angeschlossenen Energieerzeugern mehr Wirkleistung zur Verfügung gestellt wird, als momentan von den an das Netz angeschlossenen Verbrauchern benötigt wird. Dabei darf der Betreiber des Batteriespeichers nicht wahllos Leistung aus dem Netz aufnehmen und Leistung bereitstellen. Vielmehr werden von dem Netzbetreiber Vorgaben gemacht, die der Betreiber eines Batteriespeichers erfüllen muss. Insbesondere auch für die Bereitstellung der so genannten Primärregelleistung werden Vorgaben von den Netzbetreibern gemacht. Die Vorgaben führen zu einer Vereinbarung zwischen dem Betreiber des Batteriespeichers und dem Netzbetreiber, in der festgelegt ist, welche Primärregelleistung ein Batteriespeichersystem garantiert innerhalb einer bestimmten Zeit abnehmen oder zur Verfügung stellen muss.

Der Ladezustand der Energiespeichereinrichtung, in dem die Anordnung zum Aufnehmen von elektrischer Energie aus einem Stromnetz und Abgeben von elektrischer Energie an das Stromnetz sowohl die garantierte Primärregelleistung zur Verfügung stellen kann, als auch die garantierte Primärregelleistung aufnehmen kann, wird als Neutralzustand bezeichnet. In diesem Ladezustand kann die Energiespeichereinrichtung bei gegebener Nennspannung der Energiespeichereinrichtung einen hinreichend großen Entladestrom abgeben oder Ladestrom aufnehmen, um die garantierte Primärregelleistung zur Verfügung zu stellen oder aus dem Netz aufzunehmen. Der Neutralzustand des Batteriespeichersystems ist ein Wert, der sich unmittelbar aus der garantierten Primärleistung, oder - falls die garantierte Primärleistung regelmäßig durch Vereinbarungen zwischen dem Betreiber der Anordnung zum Aufnehmen von elektrischer Energie aus einem Stromnetz und Abgeben von elektrischer Energie an das Stromnetz und dem Netzbetreiber neu festgelegt wird - maximal garantierbaren Primärregelleistung ergibt.

Demnach wurden in der Vergangenheit Batteriespeichersysteme derzeit so ausgelegt, dass der Neutralzustand bei solchen Speichersystemen bei einem Ladezustand von SOC = 50% erreicht ist. Bei einem Ladezustand von SOC = 50% konnte dann bei der Nennspannung des Batteriespeichersystems ein hinreichend großer Strom aufgenommen werden oder abgegeben werden, um die garantierte Primärregelleistung aufzunehmen oder abzugeben.

Die Festlegung des Neutralzustands auf den Ladezustand SOC = 50% machte in der Vergangenheit Batteriespeicher notwendig, die sehr groß und entsprechend teuer sind.

Die Leistung der in der Vergangenheit für die Bereitstellung von Primärregelleistung notwendigen Batteriespeicher und die damit verbundenen Kosten waren in der jüngeren Vergangenheit ein Anlass nach Lösungen zu suchen, wie sie eingangs beschrieben sind.

Eine solche Lösung ist in der europäischen Patentanmeldung 15 187 205 beschrieben. Eine ähnliche Einrichtung ist in dem Dokument WO 2014/177 175 A1 offenbart

Die in der europäischen Patentanmeldung 15 187 205 beschriebene Anordnung zum Aufnehmen von elektrischer Energie aus einem Stromnetz und Abgeben von elektrischer Energie an das Stromnetz löst die Aufgabe der Reduzierung des als Energiespeichereinrichtung vorgesehenen Batteriespeichers. Das wird dadurch erreicht, dass anders als bei vorbekannten Anordnungen für die Abnahme von elektrischer Wirkleistung nicht nur der Batteriespeicher, sondern auch die Energiewandlereinrichtung zur Verfügung gestellt wurde. Die Bereitstellung elektrischer Wirkleistung erfolgt dagegen nur durch den Batteriespeicher. Da die Energiewandlereinrichtung Leistung aus dem Netz aufnehmen kann, ist es möglich, die Leistung und damit die Größe des Batteriespeichers um ca. 50% zu reduzieren. Der Neutralzustand kann dann bei der maximalen Ladung (SOC = 100%) des Batteriespeichers festgelegt werden. Im Neutralzustand steht die garantierte Leistung zur Verfügung, um an das Netz abgegeben zu werden. Ebenso ist es möglich, dass im Neutralzustand die garantierte Leistung aus dem Netz aufgenommen wird. Die Leistung wird dann aber verwendet, um die aus dem Netz entnommene Energie von der Energiewandlereinrichtung in Wärme umzuwandeln. Eine Speicherung in der Energiespeichereinrichtung ist nicht möglich.

Liegt bei einer solchen Anordnung nach der europäischen Patentanmeldung 15 187 205 der Ladezustand unter dem Neutralzustand und soll aus dem Netz Wirkleistung aufgenommen werden, wird zunächst der Batteriespeicher auf den Neutralzustand gebracht. Ist der Neutralzustand erreicht und soll weiterhin Leistung abgenommen werden, wird die aufgenommene Leistung zur Wandlung elektrischer Energie in Wärme verwendet. Dazu wird dann die Umschalteinrichtung verwendet, die den Gleichstromein- und - ausgang wahlweise mit der Energiewandlereinrichtung oder der Energiespeichereinrichtung, also dem Batteriespeicher verbindet.

Ob aus dem Netz Wirkleistung aufgenommen werden soll oder dem Netz Wirkleistung zur Verfügung gestellt werden soll, kann man an der Frequenz der Netzspannung erkennen. Bei einer Abweichung der Netzfrequenz von der Nennnetzfrequenz nach oben soll Leistung aufgenommen werden, bei einer Abweichung von der Nennnetzfrequenz nach unten soll Leistung zur Verfügung gestellt werden.

Studien der Anmelderin haben nun ergeben, dass die Frequenz des Netzes sehr häufig um nur geringe Beträge nach oben oder unten von der Nennnetzfrequenz abweicht. Das führt bei einem Batteriespeicher einer Anordnung nach der europäischen Patentanmeldung 15 187 205 im Neutralzustand dazu, dass die Umschalteinrichtung häufig schaltet, um den Gleichstromein- und -ausgang des Umrichters entweder mit der Energiespeichereinrichtung zu verbinden, wenn die Frequenz um die Nennnetzfrequenz schwankt. Jedes Mal, wenn im Neutralzustand die Nennnetzfrequenz überschritten wird, wird mittels der Umschalteinrichtung der Gleichstromein- und -ausgang des Umrichters mit der Energiewandlereinrichtung verbunden. Außerdem verbindet die Umschalteinrichtung den Gleichstromein- und -ausgang des Umrichters immer dann mit der Energiespeichereinrichtung, wenn die Frequenz unter die Nennnetzfrequenz, z.B. 50 Hz sinkt.

Aufgrund der häufigen Schwankung der Netzfrequenz um die Nennnetzfrequenz kommt es dann zu häufigen Schaltvorgängen.

Die häufigen Schaltvorgänge beanspruchen die Umschalteinrichtung so stark, dass in dem Fall, dass elektromechanische Schalter in der Umschalteinrichtung verwendet werden, diese schon nach wenigen Monaten ausgetauscht werden müssen, da die Anzahl der Schaltungen erreicht wurde, für die sie ausgelegt waren.

Anstelle von elektromechanischen Schaltern können auch leistungselektronische Schalter verwendet werden. Diese sind aber im Vergleich zu elektromechanischen Schaltern teuer und führen zu erhöhten Verlusten.

Im Ergebnis kann eine bekannte Anordnung der eingangs genannten Art derzeit nicht mit den wirtschaftlichen Vorteilen betrieben werden, die wünschenswert sind.

Hier setzt die vorliegende Erfindung an.

Der vorliegenden Erfindung liegt die Aufgabe zugrunde, eine Anordnung der eingangs genannten Art so zu verändern, dass sie wirtschaftlicher betrieben werden kann.

Diese Aufgabe wird erfindungsgemäß dadurch gelöst, dass die Anordnung eine Steuerungseinrichtung zum Steuern der Umschalteinrichtung aufweist,
- die so eingerichtet ist, dass bei der erfindungsgemäßen Anordnung der Neutralzustand bei einem Ladezustand der Energiespeichereinrichtung zwischen 50 % und 100 %, vorzugsweise bei einem Ladezustand zwischen 80 bis 95 % festgelegt ist und
- die so eingerichtet ist, dass im Neutralzustand oder in einem Ladzustand größer als im Neutralzustand aber kleiner als der Ladezustand 100% die Umschalteinrichtung den Gleichstromein- und -ausgang des Umrichters bei einer Netzfrequenz um einen vorbestimmten Betrag ungleich null größer als die Nennnetzfrequenz mit der Energiewandlereinrichtung verbindet.

Das im Gegensatz zur der in der europäischen Patentanmeldung 15 187 205 beschriebenen Anordnung Besondere der erfindungsgemäßen Anordnung ist, dass im Neutralzustand oder in einem Zustand höherer Ladung der Energiespeichereinrichtung nicht in jedem Fall einer Anforderung einer Leistungsaufnahme aus dem Netz die aufgenommene Leistung in der Energiewandlereinrichtung umgesetzt werden muss und dazu die Umschalteinrichtung die Energiewandlereinrichtung mit dem Umrichter verbinden muss. Es ist vielmehr möglich, die Leistung zunächst dazu zu nutzen, Energie in der Energiespeichereinrichtung zu speichern. Erst wenn die Energiespeichereinrichtung einen Ladezustand von 100 % erreicht hat und/oder die Netzfrequenz um den vorbestimmten Betrag größer ist als die Nennnetzfrequenz, wird die Leistung von der Energiewandlereinrichtung abgenommen und zur Wärmeerzeugung verwendet. Der vorbestimmte Betrag kann 0,05 Hz sein.

Dadurch kommt es im Neutralzustand oder einem Ladezustand zwischen dem Neutralzustand und einem Ladezustand von 100 % weder bei einer Leistungsabgabe an das Netz, noch bei einer geringen Leistungsaufnahme aus dem Netz unmittelbar zu einem Schaltvorgang der Umschalteinrichtung. Die Umschalteinrichtung wird erst dann zum Verbinden des Gleichstromein- und -ausgangs des Umrichters mit der Energiewandlereinrichtung angesteuert, wenn entweder die Leistungsaufnahme einen festgelegten Schwellwert überschreitet, was an der Netzfrequenz erkennbar ist, oder die Energiespeichereinrichtung keine Energie mehr aufnehmen kann, was erreicht ist, wenn der Ladezustand 100 % erreicht ist.

Gemäß der Erfindung kann die Steuerungseinrichtung so eingerichtet sein, dass in einem Neutralzustand oder einem Ladezustand zwischen dem Neutralzustand und einem Ladezustand von 100% die Umschalteinrichtung als Zweipunktschalter betrieben wird, dessen Eingangsgröße, d.h. den Schaltvorgang auslösende Größe, die Netzfrequenz ist.

Die Umschalteinrichtung kann z. B. als Zweipunktschalter ohne Hysterese betrieben werden. Geschaltet wird dann erfindungsgemäß immer beim Erreichen der Nennnetzfrequenz zuzüglich des vorbestimmten Betrages. Zwar wird auch bei der in der europäischen Patentanmeldung 15 187 205 beschriebenen Anordnung die Umschalteinrichtung als Zweipunktschalter ohne Hysterese betrieben. Die Umschaltung erfolgt bei der in der europäischen Patentanmeldung 15 187 205 beschriebenen Anordnung immer beim Erreichen der Nennnetzfrequenz. Durch das Verschieben der Schaltschwelle, bei dessen Erreichen die Umschaltung erfolgt um den vorbestimmten Betrag, kann die Anzahl der Umschaltungen bei geschickter Festlegung des vorbestimmten Betrages, zum Beispiel auf 0,05 Hz deutlich gesenkt werden.

Die Umschalteinrichtung kann auch als Zweipunktschalter mit Hysterese betrieben werden, deren Eingangsgröße die Netzfrequenz ist. Diese erfindungsgemäße Anordnung, insbesondere deren Steuerungseinrichtung, kann so eingerichtet sein, dass die Umschalteinrichtung in einem Neutralzustand oder einem Ladezustand zwischen dem Neutralzustand und einem Ladezustand von 100% bei ansteigender Netzfrequenz bei Erreichen eines oberen Schwellwertes, nämlich der Nennnetzfrequenz zuzüglich des vorbestimmten Betrags, von einer Verbindung des Gleichstromein- und -ausgangs des Umrichters mit der Energiespeichereinrichtung auf eine Verbindung des Gleichstromein- und -ausgangs des Umrichters mit der Energiewandlereinrichtung umschaltet. Ferner kann die erfindungsgemäße Anordnung, insbesondere deren Steuerungseinrichtung, so eingerichtet sein, dass die Umschalteinrichtung in einem Neutralzustand oder einem Ladezustand zwischen dem Neutralzustand und einem Ladezustand von 100% bei absinkender Netzfrequenz bei Erreichen eines unteren Schwellwertes, nämlich der Nennnetzfrequenz, von einer Verbindung des Gleichstromein- und -ausgangs des Umrichters mit der Energiewandlereinrichtung auf eine Verbindung des Gleichstromein- und -ausgangs des Umrichters mit der Energiespeichereinrichtung umschaltet.

Durch die Hysterese kann die Anzahl der Umschaltungen gegenüber einer Anordnung, bei der ohne Hysterese, aber mit einer Schaltschwelle bei einer Nennnetzfrequenz zuzüglich des vorbestimmten Betrages geschaltet wird, nochmals deutlich reduziert werden.

Die Steuereinrichtung einer erfindungsgemäßen Einrichtung kann auch zum Steuern des Umrichters geeignet und eingerichtet sein. Dann kann mit dem Umrichter und der Steuereinrichtung der Ladestrom und/oder die Ladespannung der Energiespeichereinrichtung eingestellt werden. Ein zusätzlicher Laderegler ist dann nicht erforderlich. Ferner kann es möglich sein, dass mit der Steuereinrichtung das Leistungsteil so angesteuert wird, dass die Umschalteinrichtung im Moment einer Umschaltung stromlos ist. Elektromechanischen Schalter der Umschalteinrichtung können dann stromlos betätigt werden.

Eine erfindungsgemäße Anordnung kann eine Messeinrichtung aufweisen, mit welcher die Netzfrequenz gemessen werden kann. Die Messeinrichtung kann einen Messsignalausgang aufweisen, der mit einem Messsignaleingang der Steuereinrichtung verbunden ist.

Die Umschalteinrichtung kann ein oder mehrere steuerbare elektromechanische Schalter, insbesondere Relais oder Schütze aufweisen, die Steuersignaleingänge haben, die unmittelbar oder mittelbar mit ersten Steuersignalausgängen der Steuereinrichtung verbunden sind. Grundsätzlich ist es auch möglich, Leistungshalbleiterschalter zu verwenden. Wegen des geringeren Preises sind elektromechanische Schalter bei der Erfindung die bevorzugte Wahl eines Fachmanns.

Dagegen weist der Umrichter vorzugsweise Leistungshalbleiterbauelemente auf, die Steuersignaleingänge haben, die unmittelbar oder mittelbar mit zweiten Steuersignalausgängen der Steuereinrichtung verbunden sind. Leistungshalbleiterschalter wären im Umrichter aufgrund der häufigen Schaltvorgänge beim Umrichten des Stromes zwischen dem Gleichstromein- und -ausgang und dem Wechselstromein- und -ausgang des Umrichters gegenüber den elektromechanischen Schaltern im Vorteil.

Die Topologie einer erfindungsgemäßen Anordnung kann wenigstens einen Transformator vorsehen, der eine Primärwicklung hat, die mit einem Netzein- und -ausgang der Anordnung verbunden ist. Der Transformator kann eine Sekundärwicklung haben, die mit dem Wechselspannungsein- und -ausgang des Umrichters verbunden ist.

Ebenso so ist es möglich, dass eine erfindungsgemäß Anordnung wenigstens einen Transformator und diesem wenigstens einen Transformator zugordnet ein Paar von Umrichtern und jedem dieser Umrichter zugeordnet jeweils eine Umschalteinrichtung aufweist. Der Transformator kann in einem solchen Fall eine Primärwicklung haben, die mit einem Netzein- und -ausgang der Anordnung verbunden ist. Er kann dann auch zwei Sekundärwicklungen aufweisen, wobei jede Sekundärwicklung über einen Wechselspannungsein- und -ausgang eines der Umrichter, diesen Umrichter und dessen Gleichspannungsein- und -ausgang mit der mit diesem Umrichter zugeordneten Umschalteinrichtung verbunden sein kann. Ein Vorteil einer solchen Anordnung ist es, dass durch die Nutzung von einem Transformator mit drei Wickelgütern gegenüber der Nutzung von zwei Transformatoren mit zwei Wickelgütern Kosten gespart werden können, ohne dass dies zu Lasten der Funktion der Anordnung geht. Außerdem ist es möglich, wahlweise einen oder beide an den Transformator angeschlossene Umrichter einzuschalten, um so die aus dem Netz abzunehmende oder die dem Netz zuzuführende Leistung einzustellen.

Es ist möglich, dass in einer erfindungsgemäßen Anordnung mehrere Transformatoren mit einer Primärwicklung und zwei Sekundärwicklungen vorgesehen sind, wobei jedem der Transformatoren jeweils ein Paar von Umrichtern zugeordnet ist, denen je eine Umschalteinrichtung zugeordnet ist. Bei einer solchen Anordnung ist es möglich, aus dem Netz Leistung mehrfach abgestuft abzunehmen oder dem Netz mehrfach abgestuft Leistung zuzuführen. Je nachdem, wie viel Leistung dem Netz entnommen werden oder zugeführt werden soll, werden ein, mehrere oder alle Umrichter eingeschaltet, um elektrische Energie vom Netz oder zum Netz zu transportieren.

Der oder die Umrichter einer erfindungsgemäßen Anordnung können so gestaltet und/oder mittels der Steuereinrichtung angesteuert oder geregelt werden, dass die Leistung, die mittels jedes Umrichters aus dem Netz abgenommen wird oder dem Netz zugeführt wird, eingestellt werden kann.

Die Energiewandlereinrichtung einer erfindungsgemäßen Anordnung kann mehrere elektrische Wärmeerzeugungsmittel, zum Beispiel Heizwiderstände umfassen, die paarweise parallelgeschaltet über je eine der Umschalteinrichtungen mit einem Gleichspannungsein- und - ausgang verbunden sind.

Jeder Umschalteinrichtung einer erfindungsgemäßen Anordnung kann eine Energiespeichereinrichtung mit einem Batteriespeicher nachgeschaltet sein.

Jeder Batteriespeicher kann ein Batterieüberwachungsmittel aufweisen, das mit der Steuereinrichtung verbunden ist. Dieses Batterieüberwachungsmittel kann insbesondere dazu dienen, einen Fehler oder einen vollständigen oder teilweisen Ausfall eines Batteriespeichers zu erkennen.

Weitere Merkmale und Vorteile der vorliegenden Erfindung werden deutlich anhand der nachfolgenden Beschreibung eines bevorzugten Ausführungsbeispiels unter Bezugnahme auf die beiliegenden Abbildungen. Darin zeigen:
- Fig. 1: ein Prinzipschaltbild einer erfindungsgemäßen Anordnung,
- Fig. 2: eine exemplarische Verteilung der Frequenzen in einem Verteilnetz,
- Fig. 3: eine Übertragungsfunktion der Umschalteinrichtung,
- Fig. 4: einen exemplarischen Frequenzverlauf und den sich daraus ergebenden Verlauf des Zustands der Umschalteinrichtung.

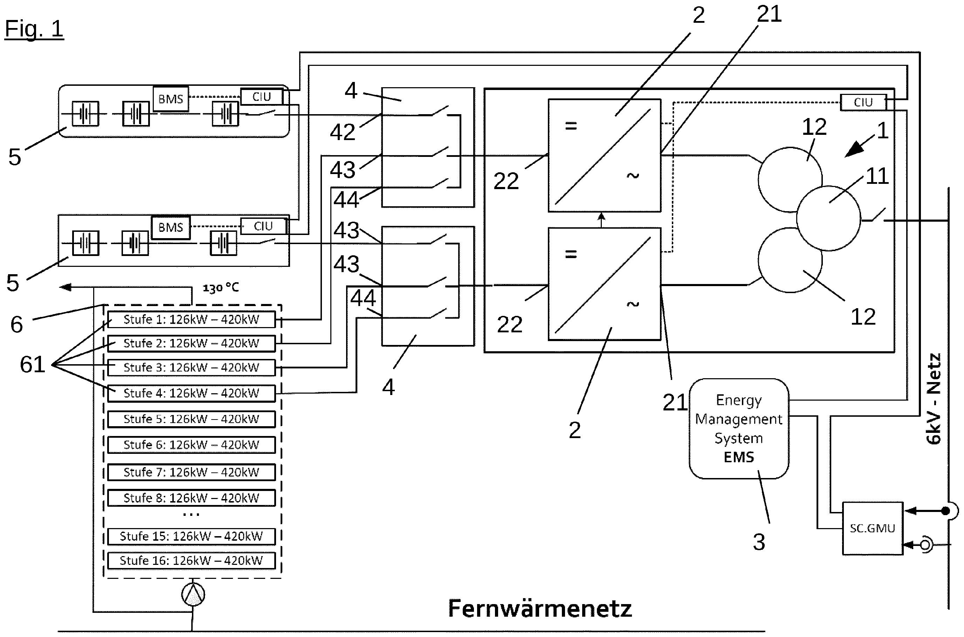

Die in dem Prinzipschaltbild (Fig. 1) dargestellte erfindungsgemäße Anordnung hat einen Netzeingang, der mit einer Primärwicklung 11 von Transformatoren 1 verbunden ist. Jeder Transformator 1 weist zwei Sekundärwicklungen 12 auf.

An jeder der Sekundärwicklungen 12 ist ein Umrichter 2 angeschlossen. Dazu weist jeder Umrichter 2 einen Wechselstromein- und -ausgang 21 auf, mit dem die zugeordnete Sekundärwicklung 12 verbunden ist. Außerdem weist jeder Umrichter einen Leistungsteil auf, der vorzugsweise aus Leistungshalbleiterbauelementen aufgebaut ist. Über den Leistungsteil ist der Wechselstromein- und - ausgang 21 jedes Umrichters 2 mit einem Gleichstromein- und - ausgang 22 des Umrichters 2 verbunden. Ein Steuereingang 23 jedes Umrichters 2 ist mit einer Steuereinrichtung 3 der Anordnung verbunden.

Der Gleichstromein- und -ausgang 22 jedes Umrichters 2 ist mit einem gemeinsamen Ein- und Ausgang 41 einer Umschalteinrichtung 4 verbunden, die neben einem Steuereingang 45 einerseits einen Ein- und Ausgang 42 für eine Energiespeichereinrichtung 5 und andererseits zwei parallelgeschaltete Ausgänge 43, 44 für eine Energiewandlereinrichtung 6 hat. Jede Umschalteinrichtung 4 ist so eingerichtet, dass entweder der Ein- und Ausgang 42 oder die parallel betätigten Ausgänge 43, 44 mit dem gemeinsamen Ein- und Ausgang 41 verbunden ist bzw. sind. Der Zustand der Umschalteinrichtung wird von der Steuereinrichtung 3 gesteuert. Die Umschalteinrichtung ist vorzugsweise aus elektromechanischen Schaltern, wie zum Beispiel Relais oder Schützen aufgebaut.

Jede Energiespeichereinrichtung 5 ist im Ausführungsbeispiel ein Batteriespeicher.

Die Energiewandlereinrichtung 6 umfasst mehrere elektrische Wärmeerzeuger 61, von denen jeder mit einem der parallel geschalteten Ausgänge 43, 44 einer Umschalteinrichtung 4 verbunden ist. Die Wärmeerzeuger 61 sind vorzugsweise identisch oder haben vorzugsweise eine gleiche elektrische Leistung und erwärmen im Beispiel Wasser aus einem Fernwärmenetz. Weitere Wärmeerzeuger der Energiewandlereinrichtung 6 können mit weiteren Umschalteinrichtungen, Umrichtern und Transformatoren verbunden sein.

Beim dargestellten Ausführungsbeispiel sind insgesamt vier Transformatoren 1 vorgesehen, die in der Fig. 1 nicht alle dargestellt sind. Diesen vier Transformatoren 1 sind jeweils zwei Umrichter 2 zugeordnet. Jedem Umrichter 2 ist eine Umschalteinrichtung 4 zugeordnet und jeder Umschalteinrichtung 4 ist eine Energiespeichereinrichtung 5 und zwei Wärmeerzeuger 61 der Energiewandlereinrichtung 6 zugeordnet.

Die Kapazität der Batteriespeicher gibt die maximale garantierbare Primärregelleistung vor, die ein Betreiber der erfindungsgemäßen Anordnung mit einem Netzbettreiber vereinbaren könnte. Aus der tatsächlich vereinbarten garantierten Primärregelleistung ergibt sich dann der Neutralzustand der Energiespeichereinrichtungen. Ist als garantierte Primärregelleistung die maximale garantierbare Primärregelleistung vereinbart, ist bei der erfindungsgemäßen Anordnung der Neutralzustand bei ca. SOC = 90 % festgelegt. Ist die vereinbarte Primärregelleistung geringer, kann der Neutralzustand bei einem geringen Ladezustand festgelegt werden, muss es aber nicht. Im Neutralzustand sind die Energiespeichereinrichtungen also in der Lage, in einem gewissen Umfang Leistung aus dem Netz aufzunehmen und zur Ladung der Energiespeichereinrichtungen zu nutzen.

Die Steuerungseinrichtung 3 ist so programmiert, dass die Umrichter 2 als Gleichrichter betrieben werden können, wenn Energie bzw. Leistung aus dem Netz entnommen wird, und als Wechselrichter betrieben werden kann, wenn Energie bzw. Leistung an das Netz abgegeben wird.

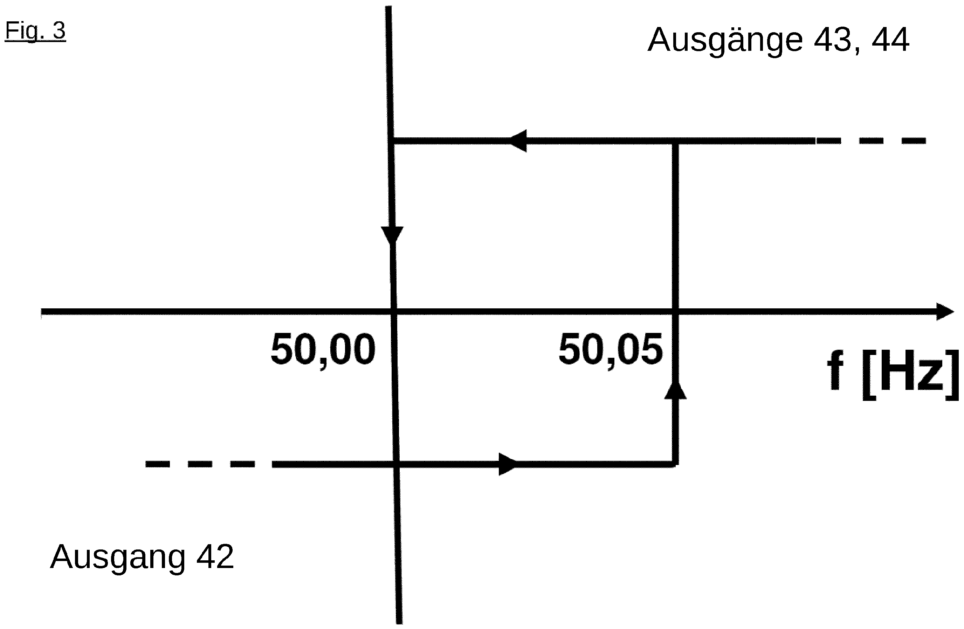

Die Steuerungseinrichtung 3 ist ferner so programmiert (siehe Fig. 3), dass die Umschalteinrichtungen bei einem Unterschreiten der Nennnetzfrequenz durch die Netzfrequenz zumindest den Ein- und Ausgang 42 zumindest einer der Umschalteinrichtungen 4 für die angeschlossene Energiespeichereinrichtung 5 mit dem gemeinsamen Ein- und Ausgang 41 dieser Umschalteinrichtung 4 verbindet. Beim Überschreiten der Nennnetzfrequenz zuzüglich eines vorbestimmten Betrags durch die Netzfrequenz werden durch die Steuerungseinrichtung, die auch dazu entsprechend programmiert ist, die zwei parallelbetätigten Ausgänge 43, 44 für die angeschlossenen Wärmeerzeuger der Energiewandlereinrichtung 6 einer der Umschalteinrichtungen mit dem gemeinsamen Ein- und Ausgang 41 dieser Umschalteinrichtung 4 verbunden. In einem Frequenzbereich zwischen der Nennfrequenz und dem um den vorbestimmten Betrag höheren Frequenzwert, im Beispiel sind das 50 Hz und 50,05 Hz, wirkt eine Hysterese, die dafür sorgt, das von einer Frequenz ausgehend, die höher ist als die Nennnetzfrequenz zuzüglich des vorbestimmten Betrags bei sinkender Frequenz erst bei Erreichen der Nennfrequenz auf eine Schaltstellung umgestellt wird, in der der Ein- und Ausgang 42 mit dem gemeinsamen Ein- und Ausgang 41 verbunden ist. Ausgehend von einer Frequenz die kleiner ist als die Nennnetzfrequenz wird dagegen erst bei Erreichen einer Frequenz gleich der Nennnetzfrequenz zuzüglich des vorbestimmten Betrags die Umschalteinrichtung 4 so umgeschaltet, dass die zwei parallelbetätigten Ausgänge 43, 44 mit dem gemeinsamen Ein- und Ausgang 41 verbunden sind.

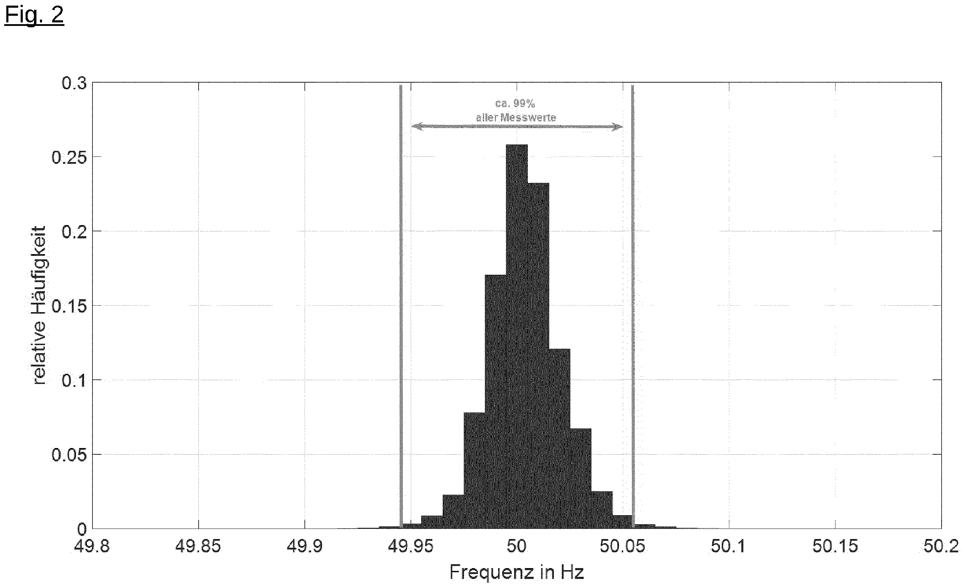

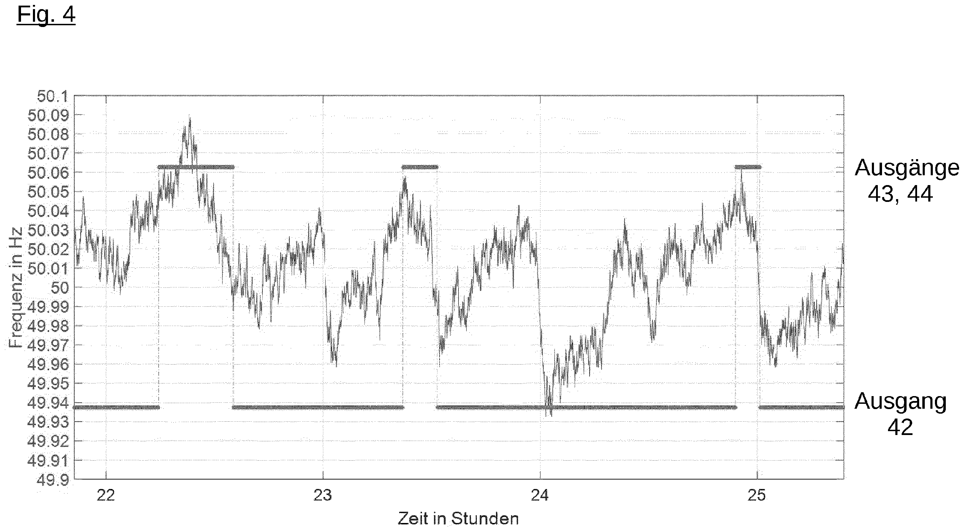

Der Vorteil der Erfindung wird insbesondere aus den Figuren 2 und 4 deutlich. Fig. 2 zeigt den Frequenzbereich, in dem von der Nennnetzfrequenz ausgehend die Energiespeichereinrichtungen 5 über die Umschalteinrichtungen 4 mit dem Umrichter 2 und letztlich mit dem Netz verbunden sind. Es zeigt auch den Frequenzbereich, in dem die Energiewandlereinrichtung 6 ganz sicher mit dem Umrichter 2 und mit dem Netz verbunden ist. Schließlich zeigt die Fig. 2 die exemplarische Verteilung der Netzfrequenz über diesen Frequenzbereich. Es zeigt sich, das der nahezu überwiegende Teil der Werte, die die Netzfrequenz im untersuchten Zeitraum angenommen hat, in einem Frequenzband 50 Hz ± 0,05 Hz liegt. Geht man von der Nennnetzfrequenz aus, wird es also bei einer erfindungsgemäßen Anordnung nur selten zu einem Schaltvorgang in der Umschalteinrichtung 2 kommen. Das bestätigt auch Fig. 4, in der exemplarisch der Verlauf der Netzfrequenz und die Schaltzustände der Umschalteinrichtung dargestellt sind. Betrachtet man in der Figur 4 insbesondere die Schwankungen der Netzfrequenz um die Nennnetzfrequenz von 50 Hz, wird einem Fachmann schnell klar, dass es bei der aus der europäischen Patentanmeldung 15 187 205 bekannten Lösung zu erheblich mehr Schaltvorgängen kommt, die die elektromechanischen Schalter der Umschalteinrichtung verschleißen können.

## Patentansprüche

1. Anordnung zum Aufnehmen von elektrischer Energie aus einem Stromnetz und Abgeben von elektrischer Energie an das Stromnetz, mit
- wenigstens einem Umrichter (2) zum Wandeln von Wechselspannung in Gleichspannung und umgekehrt, wobei der Umrichter
- einen Gleichspannungsein- und -ausgang (22),
- einen Wechselspannungsein- und -ausgang (21) und
- ein Leistungsteil mit Leistungshalbleiterbauelementen aufweist, das einerseits mit dem Gleichspannungsein- und - ausgang (22) und andererseits mit dem Wechselspannungsein- und -ausgang (21) verbunden ist,
- wenigstens einer Energiespeichereinrichtung (5), insbesondere einem Batteriespeicher aus Sekundärzellen, und
- wenigstens einer Energiewandlereinrichtung (6), insbesondere mit einem Wärmeerzeuger,
- wenigstens einer Umschalteinrichtung (4), mit welcher entweder die Energiespeichereinrichtung (5) oder die Energiewandlereinrichtung (6) mit dem Gleichspannungsein- und -ausgang (22) verbindbar ist,
**dadurch gekennzeichnet,**
- **dass** die Anordnung eine Steuerungseinrichtung (3) zum Steuern der wenigstens einen Umschalteinrichtung (4) aufweist, die so eingerichtet ist,
- **dass** bei der erfindungsgemäßen Anordnung ein Neutralzustand bei einem Ladezustand der Energiespeichereinrichtung (5) größer als 50 % und kleiner als 100 %, vorzugsweise bei einem Ladezustand zwischen 80 und 95 % festgelegt ist,
- wobei der Neutralzustand der Ladezustand der Energiespeichereinrichtung ist, in dem die Anordnung zum Aufnehmen von elektrischer Energie aus einem Stromnetz und Abgeben von elektrischer Energie an das Stromnetz sowohl die garantierte Primärregelleistung zur Verfügung stellen kann, als auch die garantierte Primärregelleistung aufnehmen kann, und wobei die Anordnung dazu angepasst ist, folgendermaßen zu arbeiten:
- **dass** im Neutralzustand oder in einem Ladezustand größer als im Neutralzustand aber kleiner als der Ladezustand 100% die Umschalteinrichtung (4) den Gleichstromein- und -ausgang (22) des Umrichters (2)
- bei einer Netzfrequenz kleiner als die Nennnetzfrequenz mit der Energiespeichereinrichtung (5) verbindet,
- bei einer Netzfrequenz größer als die Nennnetzfrequenz aber kleiner als die Nennnetzfrequenz zuzüglich eines vorbestimmten Betrags ungleich null mit der Energiespeichereinrichtung (5) oder mit der Energiewandlereinrichtung (6) verbindet und
- bei einer Netzfrequenz um mindestens den vorbestimmten Betrag ungleich null größer als die Nennnetzfrequenz mit der Energiewandlereinrichtung (6) verbindet,
wobei bei einer Abweichung der Netzfrequenz von der Nennnetzfrequenz nach oben Leistung aufgenommen werden soll, bei einer Abweichung von der Nennnetzfrequenz nach unten Leistung zur Verfügung gestellt werden soll.

2. Anordnung nach Anspruch 1, **dadurch gekennzeichnet, dass** die Steuereinrichtung (3) auch zum Steuern des wenigstens einen Umrichters (2) geeignet und eingerichtet ist und dass mit dem Umrichter (2) und der Steuereinrichtung (3) der Ladestrom und/oder die Ladespannung der Energiespeichereinrichtung (5) einstellbar ist.

3. Anordnung nach Anspruch 1 oder 2, **dadurch gekennzeichnet, dass** die Anordnung eine Messeinrichtung aufweist, mit welcher die Netzfrequenz messbar ist, wobei die Messeinrichtung einen Messsignalausgang aufweist, der mit einem Messsignaleingang der Steuereinrichtung (3) verbunden ist.

4. Anordnung nach einem der Ansprüche 1 bis 3, **dadurch gekennzeichnet, dass** die Umschalteinrichtung (4) ein oder mehrere Relais oder Schütze aufweist, die Steuersignaleingänge haben, die unmittelbar oder mittelbar mit ersten Steuersignalausgängen der Steuereinrichtung (3) verbunden sind.

5. Anordnung nach einem der Ansprüche 1 bis 4, **dadurch gekennzeichnet, dass** die Leistungshalbleiterbauelemente des Leistungsteils des Umrichters (2) Steuersignaleingänge haben, die unmittelbar oder mittelbar mit zweiten Steuersignalausgängen der Steuereinrichtung (3) verbunden sind.

6. Anordnung nach einem der Ansprüche 1 bis 5, **dadurch gekennzeichnet, dass** die Anordnung wenigstens einen Transformator (1) aufweist, der eine Primärwicklung (11) hat, die mit einem Netzein- und -ausgang der Anordnung verbunden ist und der eine Sekundärwicklung (12) hat, die mit dem Wechselspannungsein- und -ausgang (21) des Umrichters (2) verbunden ist.

7. Anordnung nach einem der Ansprüche 1 bis 6, **dadurch gekennzeichnet, dass** die Anordnung wenigstens einen Transformator (1) und diesem wenigstens einen Transformator (1) zugordnet ein Paar von Umrichtern (2) und diesen Umrichtern (2) zugeordnet jeweils eine Umschalteinrichtung (4) aufweist, wobei der Transformator (1) eine Primärwicklung (11) hat, die mit einem Netzein- und -ausgang der Anordnung verbunden ist und der zwei Sekundärwicklungen (12) hat, wobei jede Sekundärwicklung (12) über einen Wechselspannungsein- und -ausgang (21) eines der Umrichter (2), diesen Umrichter (2) und dessen Gleichspannungsein- und -ausgang (22) mit der mit diesem Umrichter (2) zugeordneten Umschalteinrichtung (4) verbunden ist.

8. Anordnung nach Anspruch 7, **dadurch gekennzeichnet, dass** die Anordnung mehrere Transformatoren (1) mit einer Primärwicklung (12) und zwei Sekundärwicklungen (22) hat, denen jeweils ein Paar von Umrichtern (2) zugeordnet ist, denen je eine Umschalteinrichtung (4) zugeordnet ist.

9. Anordnung nach Anspruch 8, **dadurch gekennzeichnet, dass** die Energiewandlereinrichtung (6) mehrere elektrische Wärmeerzeugungsmittel (61) umfasst, die paarweise parallelgeschaltet über je eine der Umschalteinrichtungen (4) mit einem Gleichspannungsein- und -ausgang (22) verbunden sind.

10. Anordnung nach einem der Ansprüche 1 bis 9, **dadurch gekennzeichnet, dass** die Anordnung mehrere Umschalteinrichtungen (4) aufweist und jeder Umschalteinrichtung (4) eine Energiespeichereinrichtung (5) mit einem Batteriespeicher nachgeschaltet ist.

11. Anordnung nach Anspruch 10, **dadurch gekennzeichnet, dass** der Batteriespeicher (5) ein Batterieüberwachungsmittel aufweist, das mit der Steuereinrichtung (3) verbunden ist.

## Claims

1. Arrangement for receiving electrical energy from a power grid and for discharging electrical energy to the power grid, having
- at least one converter (2) to convert from alternating current into direct current and vice versa, wherein the converter has
- a direct current input and output (22),
- an alternating current input and output (21), and
- a power unit having power semiconductor devices, the power unit being connected on one side to the direct current input and output (22) and on the other side to the alternating current input and output (21),
- at least one energy storage device (5), in particular a battery storage comprising secondary cells, and
- at least one energy converter (6), in particular having a heat generator,
- at least one changeover mechanism (4) to which either the energy storage device (5) or the energy converter (6) is connected using the direct current input and output (22),
**characterised in that**
- the arrangement has a control device (3) for controlling the at least one changeover mechanism (4), said control device being configured such that
- in the arrangement according to the invention, a neutral state is determined at a state of charge of the energy storage device (5) greater than 50% and less than 100%, preferably at a state of charge of between 80% and 95%,
- wherein the neutral state is the state of charge of the energy storage device in which the arrangement for receiving electrical energy from a power grid and for discharging electrical energy to the power grid can both provide the guaranteed primary regulating power and receive the guaranteed primary regulating power, and
wherein the arrangement is adapted to operate in the following way:
- in the neutral state or in a state of charge higher than the neutral state yet lower than the 100% state of charge, the changeover mechanism (4) connects the direct current input and output (22) of the converter (2)
- to the energy storage device (5) at a network frequency that is lower than the nominal network frequency,
- to the energy storage device (5) or to the energy converter (6) at a network frequency that is higher than the nominal network frequency but lower than the nominal network frequency plus a predetermined, non-zero amount, and
- to the energy converter (6) at a network frequency that is at least the predetermined, non-zero amount higher than the nominal network frequency,
wherein, when the network frequency is above the nominal network frequency, power should be received, and when the network frequency is below the nominal network frequency, power should be provided.

2. Arrangement according to claim 1, **characterised in that** the control device (3) is also suitable and arranged to control the at least one converter (2), and **in that** the charging current and/or the charging voltage of the energy storage device (5) is adjustable with the converter (2) and the control device (3).

3. Arrangement according to claim 1 or 2, **characterised in that** the arrangement has a measuring device for measuring the network frequency, wherein the measuring device has a measuring signal output that is connected to a measuring signal input of the control device (3).

4. Arrangement according to any of claims 1 to 3, **characterised in that** the changeover mechanism (4) has one or more relays or contactors, which have control signal inputs that are connected directly or indirectly to first control signal outputs of the control device (3).

5. Arrangement according to any of claims 1 to 4, **characterised in that** the power semiconductor devices of the power unit of the converter (2) have control signal inputs that are connected directly or indirectly to second control signal outputs of the control device (3).

6. Arrangement according to any of claims 1 to 5, **characterised in that** the arrangement has at least one transformer (1) having a primary winding (11) connected to a network input and output of the arrangement, and a secondary winding (12) connected to the alternating current input and output (21) of the converter (2).

7. Arrangement according to any of claims 1 to 6, **characterised in that** the arrangement has at least one transformer (1) and one pair of converters (2) assigned to the at least one transformer (1) and one changeover mechanism (4) assigned to each of the converters (2), wherein the transformer (1) has a primary winding (11) connected to a network input and output of the arrangement, and two secondary windings (12), wherein each secondary winding (12) is connected via an alternating current input and output (21) of one of the converters (2), via this converter (2) and its direct current input and output (22), to the changeover mechanism (4) assigned to this converter (2).

8. Arrangement according to claim 7, **characterised in that** the arrangement has multiple transformers (1) having one primary winding (12) and two secondary windings (22), to which one pair of converters (2) is respectively assigned, one changeover mechanism (4) being assigned to each converter.

9. Arrangement according to claim 8, **characterised in that** the energy converter (6) comprises multiple electrical heat generators (61) that are connected in parallel in pairs to a direct current input and output (22) via one of the changeover mechanisms (4).

10. Arrangement according to any of claims 1 to 9, **characterised in that** the arrangement has multiple changeover mechanisms (4) and an energy storage device (5) having a battery storage is connected downstream of each changeover mechanism (4).

11. Arrangement according to claim 10, **characterised in that** the battery storage (5) has a battery monitor connected to the control device (3).

## Revendications

1. Agencement pour recevoir de l'énergie électrique d'un réseau électrique et fournir de l'énergie électrique au réseau électrique, avec
- au moins un convertisseur (2) pour convertir une tension alternative en tension continue et inversement, dans lequel le convertisseur présente
- une entrée et une sortie de tension continue (22),
- une entrée et une sortie de tension alternative (21) et
- une unité de puissance avec des composants semi-conducteurs de puissance qui est reliée d'une part à l'entrée et la sortie de tension continue (22) et d'autre part à l'entrée et la sortie de tension alternative (21),
- au moins un dispositif d'accumulation d'énergie (5), en particulier une batterie composée de cellules secondaires, et
- au moins un dispositif convertisseur d'énergie (6), en particulier avec un générateur de chaleur,
- au moins un dispositif de commutation (4), auquel soit le dispositif d'accumulation d'énergie (5), soit le dispositif convertisseur d'énergie (6) peut être relié avec l'entrée et la sortie de tension continue (22),
**caractérisé en ce**
- **que** l'agencement présente un dispositif de commande (3) pour commander l'au moins un dispositif de commutation (4), qui est agencé de telle sorte
- **que**, dans l'agencement selon l'invention, un état neutre est fixé à un état de charge du dispositif d'accumulation d'énergie (5) supérieur à 50 % et inférieur à 100 %, de préférence à un état de charge entre 80 et 95 %,
- dans lequel l'état neutre est l'état de charge du dispositif d'accumulation d'énergie, dans lequel l'agencement pour recevoir de l'énergie électrique d'un réseau électrique et fournir de l'énergie électrique au réseau électrique peut à la fois mettre à disposition la puissance de réglage primaire garantie, et recevoir la puissance de réglage primaire garantie, et
dans lequel l'agencement est adapté pour fonctionner comme suit :
- à l'état neutre ou à un état de charge supérieur à l'état neutre, mais inférieur à l'état de charge 100 %, le dispositif de commutation (4) relie l'entrée et la sortie de courant continu (22) du convertisseur (2)
- au dispositif d'accumulation d'énergie (5) en cas de fréquence réseau inférieure à la fréquence réseau nominale,
- au dispositif d'accumulation d'énergie (5) ou au dispositif convertisseur d'énergie (6) en cas de fréquence réseau supérieure à la fréquence réseau nominale, mais inférieure à la fréquence réseau nominale plus une quantité prédéterminée non nulle, et
- au dispositif convertisseur d'énergie (6) en cas de fréquence réseau d'au moins la quantité prédéterminée non nulle supérieure à la fréquence réseau nominale,
dans lequel si la fréquence réseau dévie de la fréquence réseau nominale vers le haut, la puissance doit être reçue, si elle dévie de la fréquence réseau nominale vers le bas, la puissance doit être mise à disposition.

2. Agencement selon la revendication 1, **caractérisé en ce que** le dispositif de commande (3) est approprié et agencé également pour commander l'au moins un convertisseur (2) et que le courant de charge et/ou la tension de charge du dispositif d'accumulation d'énergie (5) peuvent être réglés avec le convertisseur (2) et le dispositif de commande (3).

3. Agencement selon la revendication 1 ou 2, **caractérisé en ce que** l'agencement présente un dispositif de mesure avec lequel la fréquence réseau peut être mesurée, dans lequel le dispositif de mesure présente une sortie de signal de mesure qui est reliée à une entrée de signal de mesure du dispositif de commande (3).

4. Agencement selon l'une quelconque des revendications 1 à 3, **caractérisé en ce que** le dispositif de commutation (4) présente un ou plusieurs relais ou contacteurs qui ont des entrées de signaux de commande qui sont reliées directement ou indirectement à des premières sorties de signaux de commande du dispositif de commande (3).

5. Agencement selon l'une quelconque des revendications 1 à 4, **caractérisé en ce que** les composants semi-conducteurs de puissance de l'unité de puissance du convertisseur (2) ont des entrées de signaux de commande qui sont reliées directement ou indirectement à des secondes sorties de signaux de commande du dispositif de commande (3).

6. Agencement selon l'une quelconque des revendications 1 à 5, **caractérisé en ce que** l'agencement présente au moins un transformateur (1) ayant un enroulement primaire (11) qui est relié à une entrée et une sortie réseau de l'agencement et ayant un enroulement secondaire (12) qui est relié à l'entrée et la sortie de tension alternative (21) du convertisseur (2).

7. Agencement selon l'une quelconque des revendications 1 à 6, **caractérisé en ce que** l'agencement présente au moins un transformateur (1) et, associée à cet au moins un transformateur (1), une paire de convertisseurs (2) et, associé à ces convertisseurs (2), respectivement un dispositif de commutation (4), dans lequel le transformateur (1) a un enroulement primaire (11) qui est relié à une entrée et une sortie réseau de l'agencement et qui a deux enroulements secondaires (12), dans lequel chaque enroulement secondaire (12) est relié, par l'intermédiaire d'une entrée et d'une sortie de tension alternative (21) de l'un des convertisseurs (2), ce convertisseur (2) et son entrée et sa sortie de tension continue (22), au dispositif de commutation (4) associé à ce convertisseur (2).

8. Agencement selon la revendication 7, **caractérisé en ce que** l'agencement a plusieurs transformateurs (1) avec un enroulement primaire (12) et deux enroulements secondaires (22) auxquels est respectivement associée une paire de convertisseurs (2), à chacun desquels est associé un dispositif de commutation (4).

9. Agencement selon la revendication 8, **caractérisé en ce que** le dispositif convertisseur d'énergie (6) comprend plusieurs moyens de génération de chaleur électrique (61) qui sont reliés, montés par paires en parallèle, à une entrée et une sortie de tension continue (22) par l'intermédiaire de respectivement un des dispositifs de commutation (4).

10. Agencement selon l'une quelconque des revendications 1 à 9, **caractérisé en ce que** l'agencement présente plusieurs dispositifs de commutation (4) et un dispositif d'accumulation d'énergie (5) avec une batterie est placé en aval de chaque dispositif de commutation (4).

11. Agencement selon la revendication 10, **caractérisé en ce que** la batterie (5) présente un moyen de surveillance de batterie qui est relié au dispositif de commande (3).
